# EUROPEAN PATENT SPECIFICATION

(11) **EP 3 585 570 B1**
(45) Date of publication and mention of the grant of the patent: **04.09.2024**
(21) Application number: 18808777.9
(22) Date of filing: 22.03.2018
(51) Int. Cl.: B25J 9/16, B25J 11/00, B25J 15/00, G05B 19/408, B65H 35/00

(54) **AUTOMATIC GENERATION OF TOOLPATHS**
AUTOMATISCHE ERZEUGUNG VON WERKZEUGWEGEN
GÉNÉRATION AUTOMATIQUE DE TRAJETS D'OUTIL

(30) Priority: 01.06.2017 US 201715611769
(43) Date of publication of application: 01.01.2020
(73) Proprietor: Intrinsic Innovation LLC, California 94043 (US)
(72) Inventor: REEKMANS, Eli, Mountain View, California 94043 (US); MICHALOWSKI, Marek, Mountain View, California 94043 (US)
(74) Representative: Auger, Hannah Maria
(86) International application number: PCT/US2018/023698
(87) International publication number: WO 2018/222250

(56) References cited:
- WO-A1-02/26397
- WO-A1-2004/071717
- WO-A1-2016/081459
- GB-A- 2 087 107
- US-A1- 2004 172 164
- US-A1- 2004 243 282
- US-A1- 2007 000 442
- US-A1- 2016 243 704
- US-B1- 9 186 795
- ABELE E ET AL: "Tool path adaption based on optical measurement data for milling with industrial robots", PRODUCTION ENGINEERING ; RESEARCH AND DEVELOPMENT, SPRINGER-VERLAG, BERLIN/HEIDELBERG, vol. 6, no. 4 - 5, 18 May 2012 (2012-05-18), pages 459 - 465, XP035095973, ISSN: 1863-7353, DOI: 10.1007/S11740-012-0383-9
- HON-YUEN TAM ET AL: "Robotic polishing of free-form surfaces using scanning paths", JOURNAL OF MATERIALS PROCESSING TECHNOLOGY, vol. 95, no. 1-3, 7 March 1998 (1998-03-07), NL, pages 191 - 200, XP055748183, ISSN: 0924-0136, DOI: 10.1016/S0924-0136(99)00338-6
- PEY YUEN TAO ET AL: "A sensor-based approach for error compensation of industrial robotic workcells", ROBOTICS AND AUTOMATION (ICRA), 2012 IEEE INTERNATIONAL CONFERENCE ON, IEEE, 14 May 2012 (2012-05-14), pages 5240 - 5245, XP032450474, ISBN: 978-1-4673-1403-9, DOI: 10.1109/ICRA.2012.6224743

## Description

### BACKGROUND

A robot may include one or more end-effectors that allow the robot to manipulate objects and one or more sensors that guide the manipulation of the objects. For example, a robot can use the end-effector(s) and sensor(s) to combine a plurality of objects into a desired physical structure. WO 02/26397 A1 discloses a device for applying adhesive to a workpiece. WO 2004/071717 A1 discloses a method and a system for programming an industrial robot to move relative to defined positions on an object, including generation of a surface scanning program. E. Abele et al. disclose in "Tool path adaptation based on optical measurement data for milling with industrial robots", Production Engineering; Research and Development, Springer Verlag, Berlin/Heidelberg, vol. 6, no. 4-5, pages 459-465 an approach in which industrial robots are used in a great variety of applications for handling, welding and milling operations. Hon-Tuen Tam et al. disclose in "Robotic polishing of free-form surface using scanning paths", Journals of Materials Processing Technology, vol. 95, no.1-3, pages 191-200 results obtained from an investigation of loose abrasive polishing of free-form surfaces using a robot. GB2087107A discloses a manipulator welding apparatus with vision correction for workpiece sensing.

### SUMMARY

The claims define the matter for protection. A robotic device can control an end-effector to follow a particular toolpath in order to perform a task in connection with a target object. In practice, an end-effector generally follows a predefined trajectory, and therefore, if the target object deviates from its model, the end-effector following the predetermined trajectory is not likely to perform the task as desired. Disclosed herein is a system and method for generating instructions for an end-effector to perform a path-based task in connection with the target object. The instructions are generated based on a parametric model of the target object. In particular, the system can determine for the end-effector a parametric toolpath that is defined with respect to one or more features of the parametric model. Then, at runtime, the system can map the parametric toolpath to the features of the as-built target object. By defining the toolpath parametrically with respect to the object and/or worksite, and then mapping the toolpath to the as-built target object and/or worksite, the end-effector can perform the path-based task as desired even if the target object deviates from its model.

In one aspect, a method as recited in claim 1 provided

In another aspect, a system as recited in claim 7 is provided. The system includes at least one communication interface for communication with a robotic device, where the robotic device comprises an end-effector configured to interact with object surfaces. The system also includes at least one communication interface for communication with a scanner device, and at least one processor. The system further includes a non-transitory computer readable medium (CRM) including program instructions executable by the at least one processor perform functions, the functions including: determining one or more parametric instructions for a path-based task by the end-effector on a surface of an object, where the one or more parametric instructions indicate a path on the surface, and where the one or more parametric instructions are based on a nominal representation of the surface. The functions also include determining that fabrication of the surface is complete and responsively cause the scanner device to perform a scan of the surface. The functions further include determining an observed representation of the surface based on the scan, and based on a comparison of the observed representation of the surface to the nominal representation of the surface, updating the one or more parametric-based instructions to provide for performance of the path-based task on the surface in accordance with the observed representation of the surface. The functions additionally include sending, via the at least one communication interface, the one or more updated instructions to the robotic device, so as to cause the robotic device to perform the path-based task on the surface.

These as well as other aspects, advantages, and alternatives will become apparent to those of ordinary skill in the art by reading the following detailed description with reference where appropriate to the accompanying drawings. Further, it should be understood that the description provided in this summary section and elsewhere in this document is intended to illustrate the claimed subject matter by way of example and not by way of limitation.

### BRIEF DESCRIPTION OF THE FIGURES

Figure 1 depicts a block diagram of a robotic control system, according to an example embodiment.
Figure 2 illustrates a view of a robot, according to an example embodiment.
Figure 3 illustrates a view of a robotic device deployed in a production site, according to an example embodiment.
Figure 4A illustrates a parametric model of an object, according to an example embodiment.
Figure 4B illustrates an as-built object, according to an example embodiment.
Figure 5A illustrates another task performed by an end-effector on an object, according to an example embodiment.
Figures 5B, 5C, and 5D each illustrate a respective deposition pattern shape, according to an example embodiment.
Figure 6 illustrates yet another task performed by an end-effector on an object, according to an example embodiment.
Figure 7 is a flow diagram of a process, according to an example embodiment.
Figure 8 is a flow diagram of another process, according to an example embodiment.
Figure 9 is a flow diagram of another process, according to an example embodiment.
Figure 10 is a flow diagram of yet another process, according to an example embodiment.
Figure 11 depicts a block diagram of a robotic device, according to an example embodiment.

### DETAILED DESCRIPTION

The following detailed description describes various features and functions of the disclosed systems and methods with reference to the accompanying figures. In the figures, similar symbols identify similar components, unless context dictates otherwise. The illustrative system and method embodiments described herein are not meant to be limiting. It may be readily understood that certain aspects of the disclosed systems and methods can be arranged and combined in a wide variety of different configurations, all of which are contemplated herein.

### I. Overview

A robotic control system can include a robotic device located in a worksite, and the robotic device can include one or more end-effectors (e.g., end-of-arm tools) that allow the robotic device to perform tasks that involve manipulating or otherwise engaging physical objects. The robotic device can also include other components (e.g., sensors) that guide the end-effector's manipulation of physical objects. Within examples, the controller can send instructions to the robotic device to use the end-effector(s) and sensor(s) to perform tasks that involve manipulation of or interaction with physical objects. The task can be a part of a larger process or project, e.g., a construction project, that the system is implementing in the worksite.

In practice, robotic control systems can program an end-effector to perform different types of tasks, such as path-based tasks. In order to perform path-based tasks, the end-effector can be programmed to follow a defined trajectory (e.g., a path), and is provided with instructions as to the actions it should take (or not take) at various locations or areas while moving along the path. In particular, the task can include a number of actions to be performed by the end-effector at different points or areas along the defined trajectory. The trajectory can be predetermined by a user (e.g., a designer) or can be predetermined by the control system. Further, the robotic device can be configured to repeatedly perform the predetermined trajectory when executing a type of task. For example, the task may be a deposition task where an end-effector, which includes an adhesive applicator, is tasked with depositing an adhesive onto an object. The robotic device can move the end-effector in a predetermined trajectory in order to deposit the adhesive onto an object. In some examples, the robotic device can be configured to repeatedly perform a task by moving the end-effector along the predetermined trajectory (e.g., in a manufacturing or processing environment).

An example of a path-based task may be a deposition task in which an adhesive such as glue, caulk, mortar, on a surface having contours, is deposited onto a surface. A robotic device that is assigned the task may be equipped with an end-effector that is capable of dispensing an adhesive onto surfaces. Robotic instructions specify the movement of a robotic arm that controls the end-effector. The instructions may cause the robotic arm to move the end-effector to deposit the adhesive onto the surface in a desired pattern. As explained above, in practice, robotic devices may include predetermined instructions that cause the robotic arm to move along a predetermined trajectory to perform the adhesive deposition task, such as in a manufacturing process.

In some cases, the robotic device may perform a path-based task as part of a larger project. The robotic device may be part of a system that is executing a project to build an output product based on a design. Part of the process of building the output product may involve the robotic device performing a path-based task. For example, the robotic device may be configured to paint a surface of an output product after the product is fabricated or built by the system.

However, predetermined programming of a toolpath, as is being done in practice, is not suitable for path-based tasks, such as material deposition, sanding, deburring, grinding, insertion with tight tolerances, polishing, etc. Programming the robotic device by predefining the trajectory may result in inconsistencies while performing path-based tasks, unless the model is identical each time the task is performed. The inconsistencies may result from the "as-built" physical product deviating from its nominal design.

Disclosed herein are methods and systems that can generate a parametric toolpath for an end-effector to follow when the end-effector performs a task in connection with a target object. In an implementation, during a pre-build phase, the system can analyze a model of the object in order to determine how to move the end-effector so that the end-effector manipulates the object to achieve a result (i.e., task parameter) specified by the model. For instance, the model of an object may indicate that a surface of the object has a desired finish. The system can then analyze the model to (i) determine the desired finish of the surface, and (ii) generate a toolpath for a sanding end-effector such that the end-effector, when following the toolpath, can sand the surface to the desired finish. In particular, the system can define the toolpath as a function of one or more parameters. For instance, the parametric toolpath can be defined as a function of a position (e.g., distance and/or orientation) relative to one or more features of the modeled object.

Then once the system is scheduled to perform the task (i.e., runtime) during a build phase, the system can receive real-time sensor data indicative of the worksite, and based on the data, can generate a representation of the worksite. The system can then map the parametric toolpath to the representation of the worksite. Mapping the parametric toolpath includes (i) identifying on the representation the features with respect to which the toolpath is defined, and (ii) generating the toolpath with respect to those features.

The system can then generate instructions that cause the end-effector to perform the path-based task. Among other things, these instructions can cause the end-effector to move along the mapped parametric toolpath when performing the task. The system can then send the instructions to the robotic device so that the robotic device can perform the task.

By defining a parametric toolpath, as opposed to predetermined positional instructions, the system can account for any deviations in the worksite and/or in the as-built target object from their respective models. In particular, mapping the parametric toolpath to the real-time representation of the worksite accounts for any deviations because the mapped toolpath is defined with respect to the actual positions of the features and not to the positions indicated by a model of the object and/or worksite.

To illustrate this, consider a task of depositing an adhesive onto a surface of an object. Current systems use a model of the object to determine where the surface will be located in the worksite. These systems then define the toolpath based on where the model indicates the surface will be located. However, in a scenario where the as-built deviates from the model such that the location of the surface has shifted from the location indicated by the model, the end-effector following the toolpath is not likely to deposit the adhesive onto the desired areas of the surface. This result is due to the fact the toolpath was defined based on where the model indicated the surface will be located, and not on the actual location of the surface.

Conversely, in the system disclosed herein, the parametric toolpath can be defined with respect to features of the surface. Then, at runtime, the system can scan the object and can map the parametric toolpath to the features of the surface. In particular, mapping the toolpath includes identifying the features of the surface and determining coordinates for the toolpath such that the toolpath is at the defined distance from the features of the surface. Therefore, even if the particular surface is no longer at the location indicated by the object's model, the end-effector following the mapped parametric toolpath will deposit the adhesive onto the particular surface because the parametric toolpath was mapped to the as-built target object. Thus, the system disclosed herein, can adjust on-the-fly to any deviations or changes in the worksite or the object from their respective models. The ability to adjust on-the-fly allows the system to perform tasks without significant delays since the system does not have to update the model and generate new task instructions in response to detecting deviations or changes from the model.

### II. Example Robotic System

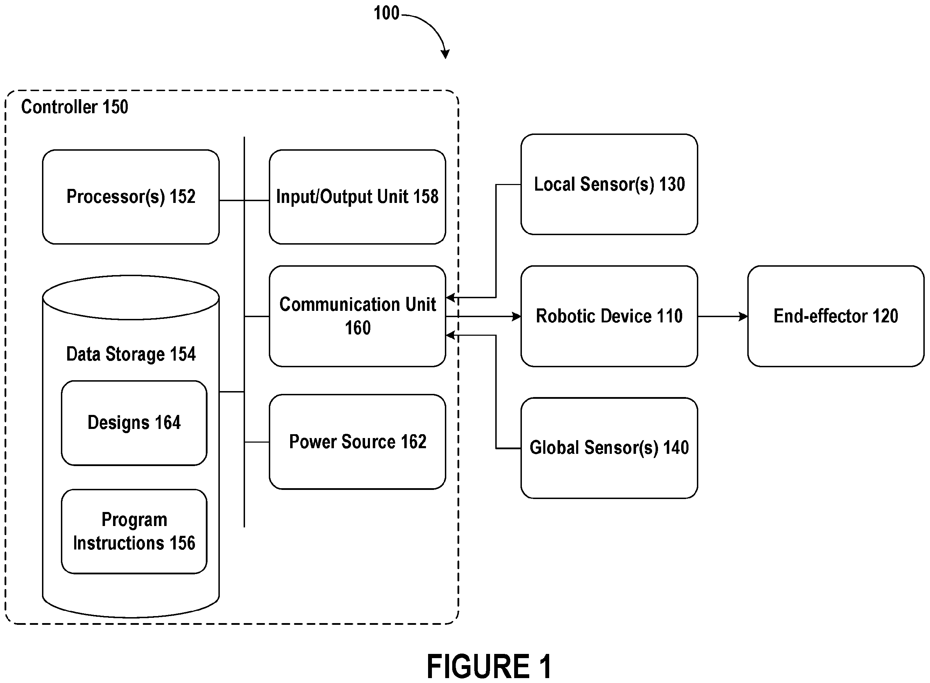

Figure 1 illustrates an example configuration of a robotic control system 100 that may be used in connection with the embodiments described herein. The robotic control system 100 may be configured to operate autonomously, semi-autonomously, and/or using directions provided by user(s). The robotic control system 100 may be responsible for managing a worksite, such as a construction site, a production site, a manufacturing site, an inspection or quality control site, etc. For example, in a construction or manufacturing worksite, the robotic control system 100 may be responsible for coordinating the construction or manufacturing of a product (also referred to interchangeably as "output product"). In particular, such a robotic control system may control one or more robotic devices to construct the product, and may also monitor the environment using one or more sensors.

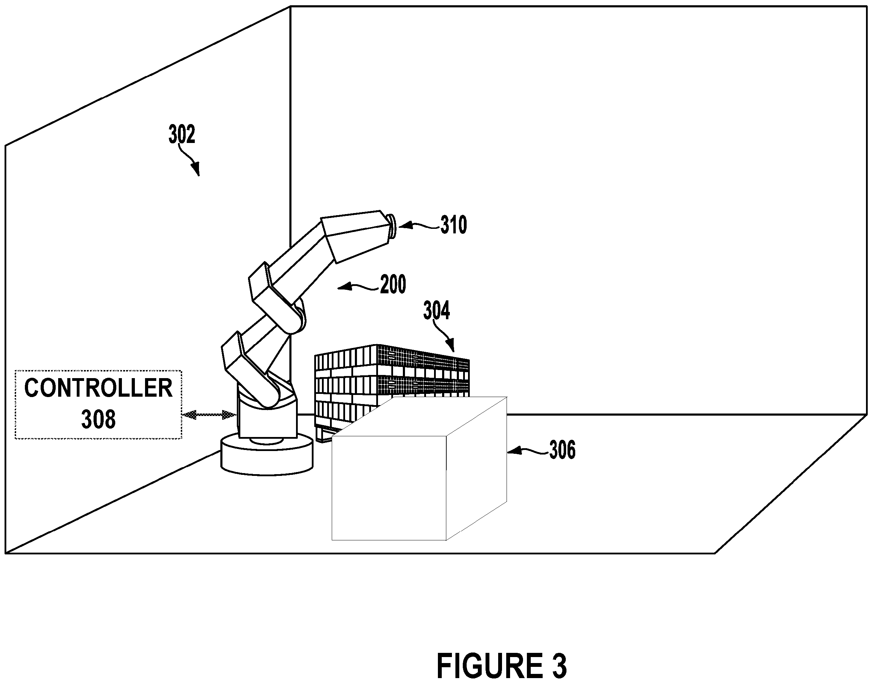

As illustrated in Figure 1, the robotic device control system 100 includes a robotic device 110 configured to control an end-effector 120. The end-effector 120 may be a tool end-effector that is configured to perform a task on a work surface (e.g., a surface of the output product) and may be mounted to a moveable component, such as a robotic arm, of the robotic device 110. The robotic device 110 may be located within a worksite (e.g., production site 302 depicted in Figure 3).

According to one example, the worksite may be a factory floor where robotic devices install parts in an assembly line to assemble a product (e.g., a table, airplane wing, etc.). According to an additional example, rather than an assembly line, the worksite may be a worksite where robotic devices combine a variety of parts to construct a physical structure. In these examples, the worksite may be a temporary location from which the final physical structure may be delivered (e.g., as a product) to another location (e.g., a distributor or customer location) when completely built.

According to yet another example, the worksite may be a municipal site where robotic devices work with heavy construction materials to construct a bridge or a road. According to a further example, the worksite may be a construction site where robotic devices work with construction materials to construct a house or a building. The worksite may also be the interior of a house where robotic devices install housing materials to construct a section of the house. In these examples, the final physical structure is installed in the worksite. According to yet another example, the worksite may be a quality or inspection control site where robotic devices scan products to determine whether the products meet specified standards.

The robotic control system 100 may further include local sensor(s) 130 and global sensor(s) 140 configured to may provide environment data representative of the worksite. For example, the local sensor(s) 130 and global sensor(s) 140 may determine the location of various objects in the worksite, such as a product that is being built by the system, for example. As another example, the local sensor(s) 130 and the global sensor(s) 140 may provide the robotic control system 100 with data that the robotic control system 100 can use to generate a "world map" of the worksite. The world map may be indicative of a real-time or near real-time representation of the worksite. Thus, the local sensor(s) 130 and global sensor(s) 140 may provide the robotic control system 100 with data such that the robotic control system 100 can update the world map continuously or periodically. The robotic control system 100 could also use the sensor data and/or the world map to track the performance of a task in the worksite. In particular, the robotic control system 100 could track any robotic devices participating in the task, any materials used in performing the task, and any changes to the as-built product as a result of performing the task.

Additionally, the local sensor(s) 130 may be arranged on or within the robotic device 110 and may be configured to measure the location of the end-effector 120 with respect to a work surface (e.g., a surface of the product being built). The local sensor(s) 130 may also be configured to scan or capture features of the work surface. The global sensor(s) 140, on the other hand, may be arranged within the worksite and may be configured to measure the location of the output product with respect to a coordinate system in the production site. The global sensor(s) 140 may also be configured to measure the location of the end-effector 120 with respect to the coordinate system or with respect to another object (e.g., location of the base of the robotic device). Further, the global sensor(s) may also be configured to measure the location of the robotic device 110.

In an embodiment, the global sensor(s) 140 may include a laser tracker system with very high resolution (e.g., hundredths of a millimeter). The laser tracker system may be used to determine locations of objects in the worksite. However, the global sensor(s) 140 are not limited to laser tracker systems, but may include any sensor capable of capturing features of objects located in the worksite, such as motion capture sensors, scanners, light detection and ranging (LIDAR) sensors, point cloud sensors, ultrasonic range sensors, Global Positioning System (GPS) receivers, sonar, optical sensors, Radio Frequency identification (RFID) systems, Near Field Communication (NFC) chips, wireless sensors, radio sensors, radars, cameras (e.g., color cameras, grayscale cameras, and/or infrared cameras), and/or range sensors (e.g., ultrasonic and/or infrared), among others.

And the local sensor(s) 130 may include a high speed camera for providing optical flow data or an inertial measurement unit (IMU). However, the local sensor(s) 130 are not limited to high speed cameras or IMUs, but may include any sensor capable of measuring the location of the end-effector 120 with respect to a work surface or capturing features of the work surface. Such sensors include force sensors, proximity sensors, motion sensors (e.g., gyroscopes, and/or accelerometers), load sensors, position sensors, thermal imaging sensors, depth sensors (e.g., RGB-D, laser, structured-light, and/or a time-of-flight camera), ultrasonic range sensors, infrared sensors, optical sensors, Radio Frequency identification (RFID) systems, Near Field Communication (NFC) chips, wireless sensors, light sensors, touch sensors (e.g., capacitive sensors), scanners, cameras (e.g., color cameras, grayscale cameras, and/or infrared cameras), and/or range sensors (e.g., ultrasonic and/or infrared), among others. In some embodiments, the location of the end-effector 120 with respect to a work surface may be determined using wheel odometry and/or robot forward kinematics.

Additionally, the local sensor(s) 130 and global sensor(s) 140 may be positioned within or in the vicinity of the worksite, among other possible locations. For example, the local sensor(s) 130 may be attached to the robotic device 110. In some embodiments, the global sensor(s) 140 may be arranged in fixed locations throughout the worksite, for example, as a dedicated sensing installation. Further, an example implementation may also use sensors incorporated within existing devices, such as mobile phones, laptops, and/or tablets. These devices may be in possession of workers located in the production site, such as construction workers in a construction site.

Figure 1 also depicts a controller 150 that may receive data from the local sensor(s) 130 and global sensor(s) 140. In particular, the local sensor(s) 130 and global sensor(s) 140 may provide sensor data to the controller 150 through a communication unit 160. The communication unit 160 may include wired links and/or wireless links (e.g., using various wireless transmitters and receivers). A wired link may include, for example, a parallel bus or a serial bus such as a Universal Serial Bus (USB). A wireless link may include, for example, Bluetooth, IEEE 802.11(IEEE 802.11 may refer to IEEE 802.11-2007, IEEE 802.11n-2009, or any other IEEE 802.11 revision), Cellular (such as GSM, GPRS, CDMA, UMTS, EV-DO, WiMAX, HSPDA, or LTE), or Zigbee, among other possibilities. Furthermore, multiple wired and/or wireless protocols may be used, such as "3G" or "4G" data connectivity using a cellular communication protocol (e.g., CDMA, GSM, or WiMAX, as well as for "WiFi" connectivity using 802.11).

In other examples, the robotic control system 100 may include access points through which the local sensor(s) 130 and global sensor(s) 140 and/or controller 150 may communicate with a cloud server. Access points may take various forms such as the form of a wireless access point (WAP) or wireless router. Further, if a connection is made using a cellular air-interface protocol, such as a CDMA or GSM protocol, an access point may be a base station in a cellular network that provides Internet connectivity via the cellular network. Other examples are also possible.

The controller 150 is shown to include one or more processor(s) 152, data storage 154, program instructions 156, an input/output unit 158, and a power source 162. Note that the controller 150 is shown for illustration purposes only, as the controller 150 may include additional components and/or have one or more components removed without departing from the scope of the disclosure. Further, note that the various components of the controller 150 may be arranged and connected in any manner. The controller 150 may be incorporated in whole or in part into the robotic device 110 or may take the form of a desktop computer, a laptop, a tablet, a wearable computing device, and/or a mobile phone, among other possibilities.

Each processor, from the one or more processor(s) 152, may be a general-purpose processor or a special purpose processor (e.g., digital signal processors, application specific integrated circuits, etc.). The processor(s) 152 can be configured to execute computer-readable program instructions 156 that are stored in the data storage 154 and are executable to provide the functionality of the controller 150 described herein. For instance, the program instructions 156 may be executable to provide for processing of sensor data received from the local sensor(s) 130 and global sensor(s) 140.

The data storage 154 may include or take the form of one or more computer-readable storage media that can be read or accessed by the processor(s) 152. The one or more computer-readable storage media can include volatile and/or non-volatile storage components, such as optical, magnetic, organic or other memory or disc storage, which can be integrated in whole or in part with the processor(s) 152. In some embodiments, the data storage 154 can be implemented using a single physical device (e.g., one optical, magnetic, organic or other memory or disc storage unit), while in other embodiments, the data storage 154 can be implemented using two or more physical devices. Further, in addition to the computer-readable program instructions 156, the data storage 154 may include additional data such as diagnostic data, among other possibilities. Further, the controller 150 may also include a power source 162 configured to supply power to various components of the controller 150. Any type of power source may be used, such as direct current from a battery or alternating current from mains electricity.

The data storage 154 may also include designs (also referred to herein as models) 164 of output products that can built or assembled by the robotic control system 100. The designs 164 may be two-dimensional (2D) and/or three-dimensional (3D) computer-aided designs (CAD). Also, the designs 164 may be embodied as computer-readable program instructions stored on the data storage 154. Further, the designs 164 may be designs of objects that the robotic device 110 can manipulate and/or interact with. These objects, such as construction materials (e.g., bricks, tiles, etc.), may be located in the worksite and may be used by the robotic device 110 to construct the output product.

The designs 164 may also be indicative of how a physical structure of the output product will be configured and how it will perform once constructed by the robotic device 110. As such, and as explained below, the controller 150 may use the designs 164 as a guide to generate instructions for the robotic device 110. The instructions may be indicative of specific robotic actions that can be performed by the robotic device 110 to construct a portion of or the entire output product.

The designs 164 may also be indicative of a set of properties of the output product. For example, the set of properties may be indicative of aesthetic properties, such as color, markings, visual patterns, and surface finish/texture, among other properties. Additionally or alternatively, the set of properties may be indicative of mechanical properties, such as bending strength, brittleness, bulk modulus, coefficient of friction, compressive strength, creep, elasticity, fatigue strength, flexibility, fracture toughness, hardness, plasticity, resilience, shear strength, stiffness, stress/strain properties, surface roughness, tensile strength, toughness, viscosity, yield strength, and weight, among other properties. Additionally and/or alternatively, the set of properties may be indicative of geometric properties such as shape, size, orientation, angles, etc.

Additionally or alternatively, the set of properties may be indicative of electrical and/or magnetic properties, such as capacitance, conductivity, density, dielectric strength, field properties, inductance, permittivity, and resistance, among other properties. Additionally or alternatively, the set of properties may be indicative of chemical properties, such as corrosion resistance, flammability, pH, reactivity, stability, surface energy/tension, and toxicity, among other properties. Additionally or alternatively, the set of properties may be indicative of manufacturing properties for coating, cutting, drilling, forming and shaping processes, heat treating, joining, machining, rolling, sanding, and welding, among other techniques. Additionally or alternatively, the set of properties may be indicative of optical properties, such as absorbance, fluorescence, photosensitivity, reflectivity, refractive index, scattering, and transmittance, among other properties. Additionally or alternatively, the set of properties may be indicative of thermal properties, such as boiling point, critical point, emissivity, melting point, specific heat, thermal conductivity, thermal diffusivity, and thermal expansion, among other properties.

Figure 1 further depicts the controller 150 including an input/output unit 158. The input/output unit 158 may output information to a user via a display. The display may take on any form and may be arranged to project images and/or graphics to a user of the controller 150. In an example arrangement, a projector within the input/output unit 158 may be configured to project various projections of images and/or graphics onto a surface of the display. The display may include: an opaque or a transparent (or semi-transparent) matrix display, such as an electroluminescent display or a liquid crystal display, one or more waveguides for delivering an image to the user's eyes, or other optical elements capable of delivering an image to the user. A corresponding display driver may be disposed within the controller 150 for driving such a matrix display. Other arrangements may also be possible for the display. As such, the display may show a graphical interface that may provide an application through which the user may interact with the systems disclosed herein.

Further, the robotic control system 100 may display the world map on the display of the input/output unit 158. Therefore, the input/output unit 158 may display a real-time or near real-time representation of the worksite, including the as-built product. Accordingly, a user may monitor the progress of building or assembling the output product. Based on the real-time feedback data (e.g., data from local sensor(s) 130 and global sensor(s) 140) indicative of the worksite, the displayed world map may be updated to reflect the real-time changes in the worksite.

The input/output unit 158 may also include task controls. The task controls may provide a user with real-time control of task execution. For instance, the user may be able to provide an input that may start, stop, skip, or modify a task. For instance, a graphical interface displayed on display may include a task queue of the tasks that the robotic control system 100 will perform. The graphical interface may allow the user to start, stop, skip, or modify a task. In some implementations, the graphical interface may allow the user to enter parameters relating to the output product. The graphical interface may allow the user to enter parameters that may relate to aspects of the output product, including dimensions, density, curvature properties, other geometric properties, materials to be used, and/or other numeric inputs.

In further examples, the graphical interface may contain a timeline of the building the output product. The timeline may have a cursor representing a current timestamp, which may represent a particular point in time of the process of building the output product. In addition, the timeline may contain buttons to play through the process at a particular speed, or fast-forward or rewind through the process. The timeline may be used to control the point in time at which the geometry and/or other aspects of the worksite are displayed within the display. Further, the timeline may be used to indicate a particular point in time either for purposes of simulating the output product or for visualizing within software an actual physical building process taking place within the worksite. Further, a user may modify the design of the output product via the graphical interface.

In some examples, the display may provide users with multiple 3D views of the worksite, and may allow a user to change the orientation and/or zoom of a particular view. In other examples, the display may present other types of representations of the worksite, such as numerical representations, as well or instead. In further examples, users may be provided with a three-dimensional (3D) modeling graphical interface that allows the user to alter one or more variables describing a worksite and/or the desired output product that affect a building process in the worksite.

In further examples, the graphical interface may include parameters describing aspects of the process during runtime. In particular, robot parameters may be displayed that describe characteristics of the robotic device 110, such as the position of the robotic device 110, physical tools currently being used by the robotic device 110, and/or axes along which the robotic device 110 is currently operating within the worksite. Additionally, tool parameters may be displayed describing operating characteristics of the end-effector 120. For instance, an amount of power being supplied to a spindle or an amount of force being used with a gripper could be displayed within an example graphical interface. Additionally, the graphical interface may display sensor data. The graphical interface may also contain controls related to ordering and/or speed of execution of tasks. Further, the graphical interface may contain controls relating to the robot actors, such as robot positions and diagnostics. Additionally, the graphical interface may allow for control of different attributes of the output product. Within the graphical interface, controls may be provided for manipulating one or more tasks being executed during runtime. For example, a user may be able to interact with graphical using touch input in order to modify a building process by altering planned tasks in real time or almost real time.

In some examples, a graphical interface may include a device control in order to select a particular device within a worksite. For example, the graphical interface may display the robot actors within worksite and may allow for a selection of a particular robotic device. Additionally, the graphical interface may include robot parameters, such as position information describing the current position of robotic devices. In some examples, the position could be displayed as Cartesian coordinates, as robot axes values, or both. In further examples, the position information may reflect the position of an end-effector of a robot actor or of a physical tool mounted on the robot's end-effector.

Additionally, the input/output unit 158 may receive user-input (e.g., from the user of the controller 150). In particular, the input/output unit 158 may allow for interaction with the graphical interface such as for scrolling, providing text, and/or selecting various features of the application, among other possible interactions. The input/output unit 158 may take on various forms. In one example, the input/output unit 158 may include a pointing device such as a computing mouse used for control of the graphical interface. However, if the input/output unit 158 includes a touch screen display, touch-input can be received (e.g., such as using a finger or a stylus) that allows for control of the graphical interface. In another example, the input/output unit 158 may include a keyboard that provides for selection of numbers, characters and/or symbols to be displayed via the graphical interface. For instance, in the arrangement where the input/output unit 158 includes a touch screen display, portions the display may show the keyboard. Thus, touch-input on the portion of the display including the keyboard may result in user-input such as selection of specific numbers, characters, and/or symbols to be shown on the graphical interface via the display. In yet another example, the input/output unit 158 may include a voice input device that receives audio input, such as from a user through a microphone, that is then interpretable using one of various speech recognition techniques into one or more characters that may be shown via the display. Other examples may also be possible.

### III. Example Robotic Device

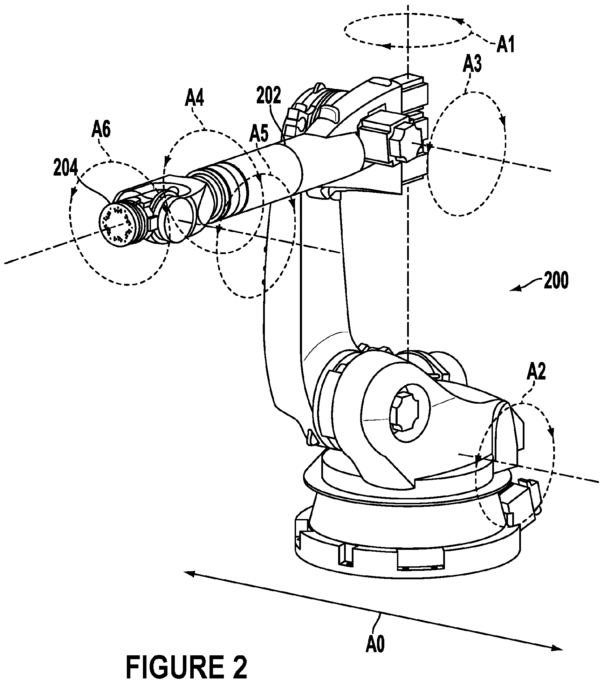

Figure 2 illustrates a robotic device 200, according to an example embodiment. The robotic device 200 may include aspects of the robotic device 110 depicted in Figure 1. As illustrated in Figure 2, the robotic device 200 may include a robotic arm 202 with an end-effector 204. The end-effector 204 can be equipped with one or more other tools, grippers, or guides. The robotic arm 202 can move along one or more degrees of freedom. For example, the robotic arm 202 can move along six degrees of freedom, depicted in Figure 2 as A1-A6. In certain examples, the robotic device 200 can move along one or more axes A0, such as along a rail (not shown) that allows side to side movement.

In certain embodiments, instructions may be given to the robotic device 200 to position the robotic arm 202 at a specific location. As described herein, positions of the robotic arm 202 along A1-A6 and/or the positions of the robotic device 200 along one or more axes A0 may be calculated by a process of the related controller. In alternative embodiments, position control of the robotic device 200 and/or the robotic arm 202 may require separate, individual settings and control commands. Robotic devices operating with fewer degrees of freedom may be used in some examples as well or instead.

The robotic device 200 may also be able to interchange end-effectors. In order to interchange end-effectors, the robotic device 200 may have access to a plurality of end-effectors that may be stored on or near the robotic device 200. The plurality of end-effectors may include end-effectors of different types, such as tools, grippers, sensors, and guide end-effectors. As such, the robotic device 200, which has the ability to interchange end-effectors, may be assigned different tasks that require different types of end-effectors. The task that the robotic device 200 is assigned may determine the end-effector that the robotic device 200 selects.

Within examples, the robotic device 200 may be used to perform tasks to assemble or construct an output product. Generally, a task may involve the robotic device 200 using an end-effector to interact with or manipulate an object (also referred to herein as a target object). To perform a task, the robotic device can move the end-effector along a path in order to interact with or manipulate the object.

As discussed above, generally existing robotic control systems cause an end-effector to follow a predetermined trajectory (e.g., a glue depositor in a production line that repeatedly deposits glue in the same pattern on each object in the production line). Typically, such robotic control systems analyze the model of the output product and then generate a predetermined toolpath for an end-effector based on the model of the output product.

However, as discussed above, the as-built product may deviate from the model of the output product. Therefore, when an end-effector follows a predetermined toolpath when performing a task that interacts with the as-built product, the result of the manipulation of the target object may also deviate from the product's model. As such, performing tasks by following predetermined toolpaths could introduce variations/errors into the as-built product. Even if a variation/error on its own may appear to be minor, the accrual of variations/errors may prevent the production process from producing the final product as defined by the model. To help overcome this issue, disclosed herein are various implementations for generating a toolpath for an end-effector such that the end-effector's performance of a task satisfies the model of the output product.

### IV. Example System and Method

Figure 3 illustrates a production site 302 in which the robotic device 200 is located, according to an exemplary embodiment. In particular, a controller 308 (e.g., a controller of a robotic control system) of the robotic device 200 could receive an instruction to build a new object or interact with an existing object in the worksite. For instance, the controller 308 could receive an instruction to modify an existing object in the worksite. As illustrated in Figure 3, the controller 308 can operate the robotic device 200 and can cause the robotic device 200 to interact with or manipulate physical objects located in or near the production site 302, perhaps to build a new object or to modify an existing object. Figure 3 further illustrates an as-built product 306. The as-built product can be a built portion of the output product that is being built by the robotic device 200. Within examples, the process of building the output product could involve a design phase (i.e., a pre-build phase) and a build phase.

In an embodiment, during the design phase, the controller 308 could determine a model of the object that the robotic device 200 is building and/or manipulating (also referred to herein as the output product). In particular, the controller 308 may determine a parametric design (e.g., design 156) of the output product, and could analyze the design in order to determine how to build and/or manipulate the output product. Since the parametric design is indicative of the materials of the output product and defines the output product in terms of parameters, the controller 308 could determine, based on the parametric model, how to construct the output product. Constructing the output product includes building the output product (i.e., defined by functional features) and modifying the as-built output product to achieve the nonfunctional (e.g., aesthetic features) of the output product. Specifically, the output product may include one or more physical pieces each respectively made of at least one material. And these piece(s) may be worked on to produce the output product, such as by being cut, added together, and/or shaped into the desired product by one or more tools. By way of example, the output product could include a piece of metal and a piece of wood that could be added together and/or respectively shaped, among other possibilities.

In an embodiment, the parametric model may represent various features of the output product. Generally, each such feature may be a distinctive attribute or aspect of the product. By way of example, a feature of a product may be a surface of a table, legs of the table, and/or cup holders formed on the surface of the table, among other possibilities. Further, each feature of the product may also be respectively defined by one or more parameters. In particular, a parameter may be any numerical or other measurable factor that helps define a feature of the product and/or conditions of the product's operation. Furthermore, each parameter may have a respective value that explicitly defines the manner in which a respective feature should be produced. For example, a leg of a table may be defined by the parameter of length and that length may have a value (e.g., five meters (5m)) explicitly defining the length of the table's leg and/or the length that the leg should have. As such, the model of the product may specify one or more parameters for one or more features as well as a respective value for each such parameter, so that the product is then produced to in accordance with those specifications.

Additionally, the relationship between the features of a model may be defined by one or more parameters and/or algorithms. For example, the relationship between two elements may be defined by the parameter of length and that length may have a value (e.g., five meters (5m)). As such, the model of the product may specify one or more parameters that define a relationship between the features as well as a respective value for each such parameter, so that the product is then produced in accordance with those specifications.

In practice, various parameters could be feasibly specified in a model for a product and/or otherwise exhibited by the product when it is produced or being produced. Although some parameters are discussed herein by way of example, it should be understood that other parameters are possible as well without departing from the scope of the present disclosure. For instance, other parameters may include any of those that could be specified in currently-known and/or future developed computer-aided design (CAD) software (e.g.,concentricity), among others.

In one case, a parameter may be a position of a feature of the product. In one example, the position could be defined by a coordinate value relative to a coordinate system. In another example, the position could be defined by a distance value indicating a distance to a point in physical space and/or a point on the structure, among others. In yet another example, the position could be defined by a spatial vector indicating both magnitude (e.g., distance) and direction in physical space (e.g., a direction that the feature should face).

In another case, a parameter may be an orientation of a feature of the product. In one example, the orientation could be defined by an angle value indicating an angle of the feature relative to another. For instance, the orientation could be defined by an indication of parallelism or perpendicularity to another feature.

In yet another case, a parameter may be a material property of a feature of the product. For example, a material property could be defined by a value or other indication of material density, curvature, material strength, size, shape, conductivity, temperature, and/or color, among others.

In yet another case, a parameter may be an attribute of an interaction with a feature of the structure. For example, an attribute of an interaction could be defined by a force value indicating a force that was applied and/or should be applied to the feature. In another example, an attribute of an interaction could be defined by a pressure value indicating a pressure that was applied and/or should be applied to the feature. In yet another example, an attribute of an interaction could be defined by an indication of an approach for moving the feature (e.g., turn a knob clockwise versus counterclockwise during production of the structure). In yet another example, an attribute of an interaction could be defined by an indication of a movement characteristic that the feature should exhibit, such as by a maximum speed at which the feature is to be able to rotate. Other cases and examples are also possible.

Once the controller 308 has analyzed the parametric model output product, the controller 308 could then generate tasks that could be performed in order to build and/or modify the output product. A task could be any type of task that could be performed in connection with building a product. Example types of tasks include construction tasks, manufacturing tasks, assembly tasks, processing tasks, etc. Additionally, a task could involve interacting with objects located in the worksite 302, such as parts, tools, obstacles, etc. Furthermore, a task could be performed using one or more tools available in the worksite 302. In an example, the controller 308 may generate one or more path-based tasks to be performed by the robotic device 200. Also, during the design phase, the controller 308 can determine an order in which to perform the task (i.e., order of operations).

In generating a task, the controller 308 could define the task based on the analysis of the parametric model of the output product. For instance, for a path-based task, the controller 308 could determine based on the parametric model a task parameter for the path-based task. Then, the controller 308 could define the task such that the task parameter is satisfied. By way of example, for a painting task, the controller 308 could determine based on the parametric model of the object one or more surface of the object that are to be painted. The controller 308 may determine based on the parametric model a task parameter of the painting task. For example, the task parameter could define a surface area of the object to be painted, a particular paint to use, a particular design to paint, among other examples.

Additionally, the controller 308 could determine a toolpath for an end-effector to perform the path-based task. For instance, the controller 308 could determine a painting pattern that would satisfy the paint task parameters. The controller 308 could then generate a toolpath for a paint brush end-effector such that the paint brush can paint the object according to the painting pattern. In an embodiment, the controller 308 could define the generated toolpath parametrically. For instance, the generated toolpath could be defined as a function of distance from a particular feature of the output product and/or as a function of distance from a particular feature or coordinate system in the worksite. Other example parameters are possible.

Once the controller 308 determines one or more tasks to be performed in connection with the output product, the controller 308 can then commence (immediately or at a later time) the production phase in which the output product is built and/or modified. In particular, the controller 308 can cause the robotic device 200 to perform the one or more tasks. For instance, when the robotic device 200 is scheduled to perform a task (i.e., runtime of the task), the controller 308 can generate instructions for the robotic device 200 to perform the task.

In an embodiment, the controller 308 could generate the instructions based on the task parameters or task data and real-time worksite data. In particular, the instructions could include instructions indicative of the toolpath for the end-effector. Within examples, the instructions that are generated by the controller 308, and that cause an end-effector to perform a task by following a parametric toolpath, could be referred to as "parametric instructions." To generate the instructions indicative of the toolpath, the controller 308 could use the real-time worksite data to receive or generate a representation of the worksite. Then, the controller 308 could identify the features (e.g., features of the as-built and/or the worksite) with respect to which the toolpath (that was generated in the design phase) is defined. Once the features are identified, the controller 308 could map the parametric toolpath to the identified features. The controller 308 could then generate instructions indicative of the mapped toolpath. By generating instructions/mapping the parametric instructions for tasks at runtime, the controller 308 can account for any changes in the worksite and/or any deviations from the parametric model. And by doing so, a task is performed more accurately with respect to a model/ideal task.

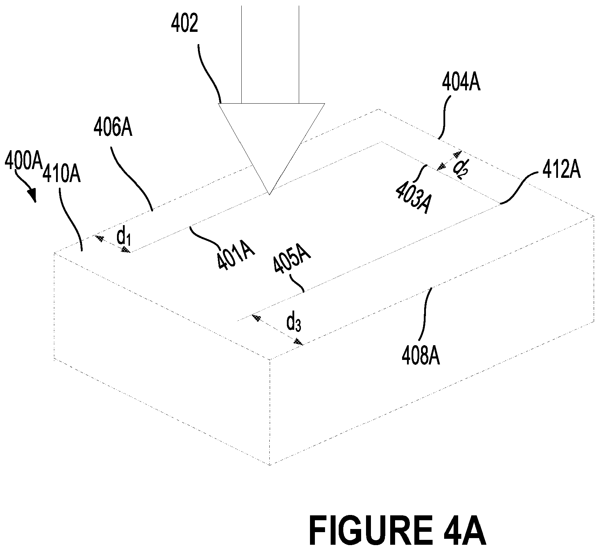

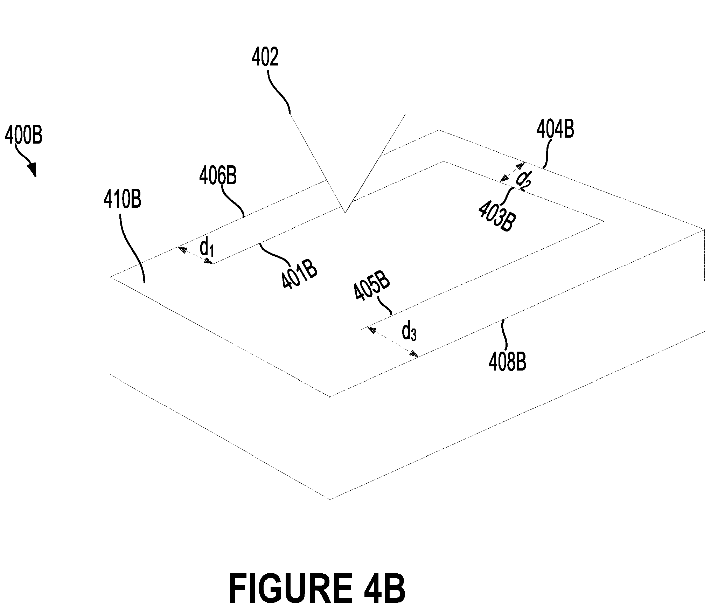

Figures 4A and 4B illustrate an example task to be performed by the robotic device 200, in accordance with an example embodiment. In this example, the task is an adhesion application task, and therefore, the end-effector 310 of the robotic device 200 includes an applicator or dispenser tool 402. The applicator 402 can include a valve that stores a material, such as a sealant, adhesive, coating, caulk, binder, plaster, etc. And the material can have different forms including a solid, gas, gel, liquid, aerosol, etc.

Further, the applicator 402 can be configured to apply or dispense the material through an opening (e.g., a nozzle). For example, the applicator 402 can apply the material onto an object. Accordingly, the robotic device 200 can be configured to use the applicator 402 to perform tasks that involve material deposition. In this example, the task that is assigned to the robotic device 200 may be an adhesive application task in which the robotic device 200 applies an adhesive onto a target object, which in this example, is a tile.

In an embodiment, the controller 308 can generate instructions for the robotic device 200 to perform the adhesion application task. In particular, the instructions can be based on a parametric model 400A of the tile, which is illustrated in Figure 4A. The parametric model 400A may be part of a larger parametric model of the output product. Further, the parametric model 400A can describe a desired parameter of the deposition. In an implementation, the system can analyze the parametric model in order to determine the parameter. By way of example, the parametric model indicates that two distinct pieces are joined together in the product. Accordingly, the system can determine that two pieces can be coupled together using an adhesive. Then, the system can determine the parameter that describes the desired deposition. For instance, the parameter can be a desired deposition coverage area on a surface 404A of the tile. The desired deposition coverage area can include specific areas to be covered on the surface 410A of the tile or can be defined as a percentage of an area on a surface of the tile to be covered (e.g., 20% of a surface to be covered). In another example, the desired parameter of the deposition can be a uniformity of deposition, a desired strength, or a desired pulling area.

Based on the one or more parameters, the controller 308 can determine an adhesive deposition pattern to be deposited on the surface 410A of the tile. In particular, the adhesive deposition pattern is determined such that the pattern satisfies the desired parameter (e.g., deposition coverage area) indicated by the parametric model 400A. Within examples, the system can use one or more characteristics of the tile and/or one more characteristics of the worksite to determine the adhesive deposition pattern that satisfies the one or more parameters. The one or more object characteristics can be determined from the parametric model 400A of the tile and/or sensor data (e.g., data from local sensors and/or global sensors). Examples of relevant object characteristics for the adhesive application task may include dimensions of the target object, material of the target object, potential tension stress, compression stress, and/or strain of the target object, potential impact and vibration forces that the target object may experience, potential fatigue, potential contact with other chemicals, etc. And examples of relevant worksite characteristics include temperature, humidity, air-pressure, UV exposure, etc.

Figure 4A illustrates an example deposition pattern 412A. As illustrated in Figure 4A, the deposition pattern 412A, the deposition pattern may include segments 401A, 403A, and 405A. Determining the deposition pattern 412A involves determining dimensions of the pattern, such as a thickness/depth, width, and length of each segment of the deposition pattern 412A. It may also involve determining other features of the deposition, such as a type of adhesive to deposit. Other features can also be determined.

Once the system determines a deposition pattern, the system can then define the deposition pattern as a function of one or more parameters. In this example, the deposition pattern is defined as a function of distance from one or more features of the tile. As illustrated in Figure 4A, the deposition pattern 412A on the surface 410A is defined with respect to edges 404A, 406A, and 408A such that there is a distance d₁ between edge 406A of the tile and segment 401A of the deposition pattern, a distance d₂ between edge 404A of the tile and segment 403A of the deposition pattern, and a distance d₃ between edge 408A of the tile and segment 405A of the deposition pattern.

Additionally and/or alternatively, the controller 308 can determine for the applicator 402 a toolpath to follow so that the applicator 402 can deposit the adhesive according to the parametric deposition pattern 412. In particular, the controller 308 can use characteristics of the robotic device 200, such as kinematic constraints (e.g., collision, joint limits, etc.) and/or freedoms, to determine the toolpath that the end-effector can follow in order to deposit adhesive in the deposition pattern 412A. After determining the toolpath, the controller 308 can then define the toolpath with respect to one or more features of the tile. For instance, similar to the deposition pattern 412A, the toolpath can be defined as a function of distance from the edges 404A, 406A, and 408A of the tile.

Subsequently, at runtime for example, the controller 308 can generate task instructions that can cause the robotic device 200 to perform the adhesive application task. In particular, the task instructions can cause the robotic device 200 to control the end-effector to deposit the adhesive according to the deposition pattern 412A. Therefore, the instructions can be indicative of the toolpath that the end-effector 402 follows in order to deposit adhesive in the deposition pattern 412A. Additionally, the instructions can be indicative of control parameters that cause the end-effector to deposit the adhesive in the deposition pattern 412A, and to satisfy the other features of the deposition (e.g., depth, adhesive type, curing time, etc.).

To determine the instructions indicative of the toolpath, the controller 308 can use sensor data to determine a location of the edges with respect to which the toolpath is defined. For instance, the controller 308 can use sensors to determine information indicative of the tile, including information indicative of the properties of the tile (e.g., material from which it is manufactured, surface smoothness, etc.). Additionally, the controller 308 can use the sensor data to generate or receive a 2D or 3D representation of the tile. The representation of the tile can be used to determine features of the as-built tile, such as the location and dimensions of the edges of the tile.

Figure 4B illustrates a representation 400B of the as-built tile, according to an exemplary embodiment. As illustrated in Figure 4B, the as-built tile 400B includes an edge 404B, an edge 406B, and an edge 408B. The edge 404B, edge 406B, and edge 408B of the as-built correspond to edge 404A, edge 406A, and edge 408A of the parametric model respectively. And a surface 410B of the as-built corresponds to the surface 410A of the model. In this example, however, due to manufacturing errors in making the tile, the dimensions of the as-built tile 400B deviate from the dimensions of the nominal model 400A of the tile. In particular, the length of the edges 404B, 406B, and 408B of the as-built are shorter than the lengths of edges 404A, 406A, and 408A of the parametric model respectively.

Within examples, once the controller has identified the features of the as-built, the controller 308 can then map the toolpath of the adhesive applicator 402 to the as-built. Mapping the toolpath can include defining the toolpath with respect to the edges 404B, 406B, and 408B of the as-built tile. Then once the adhesive applicator 402 follows the mapped toolpath, the applicator 402 can deposit adhesive in the deposition pattern 412B on the surface 410B. As illustrated in Figure 4B, the deposition pattern 412B is located with respect to edges 404B, 406B, and 408B such that there is the distance d₁ between edge 406B of the tile and segment 401B of the deposition pattern, distance d₂ between edge 404B of the tile and segment 403B of the deposition pattern, and distance d₃ between edge 408B of the tile and segment 405B of the deposition pattern. The distances d₁, d₂, and d₃ shown in Figure 4B are equivalent to the distances d₁, d₂, and d₃ shown in Figure 4A. Therefore, despite the deviation in lengths of the edges 404B, 406B, and 408B from the model edges 404A, 406A, and 408A, the deposition pattern 412B is located with respect to the edges 404B, 406B, and 408B as specified by the model (i.e., location of the deposition pattern 412A with respect to the edges 404A, 406A, and 408A).

The controller 308 can then generate instructions that cause the end-effector to perform the adhesive deposition task. In particular, the controller 308 generates instructions indicative of a toolpath and one or more control parameters of the applicator 402. The control parameters of the applicator 402 may include a speed of the applicator 402, a pressure at which the applicator 402 deposits an adhesive, a type of adhesive to be deposited, etc. In some examples, a size of the nozzle (i.e., tip size) of the applicator 402 may be adjustable. In such examples, the parametric instructions can also specify the size of the nozzle. The instructions can also specify a dispense time for the applicator 402. Other control parameters are possible.

Although Figures 4A-4B depict an example adhesion application task that can be performed using an adhesive applicator 402, this example should not be limiting. For example, the robotic device 200 can include another tool in addition to the applicator 402. The tool can be any tool that can shape, pattern, smooth, and/or move any material deposited by the applicator 402. In such examples, the applicator 402 can deposit the material onto the surface 410B, and then the second tool (e.g., a trowel) may be used to shape the material into a particular shape or pattern.

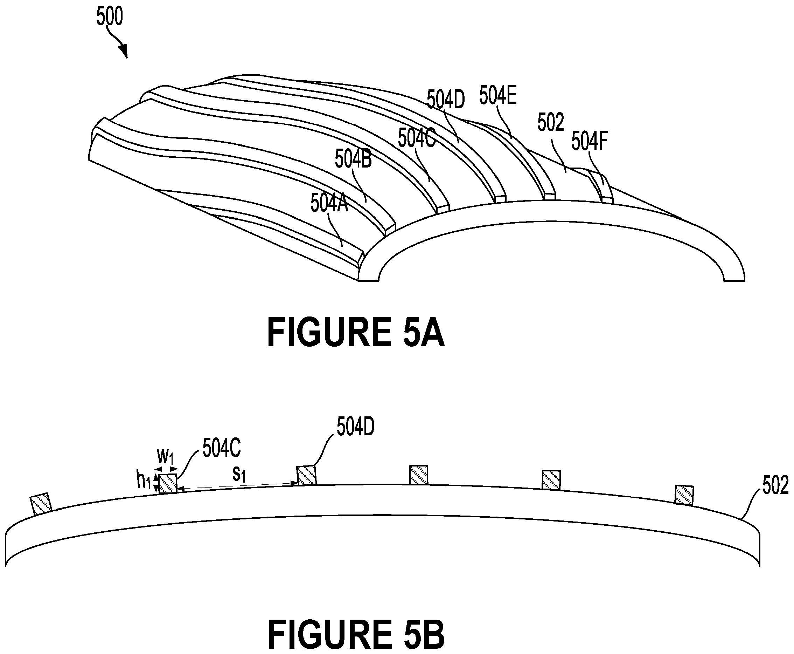

Figure 5A illustrates of another example of a path-based task performed in connection with the as-built object 306 (illustrated in Figure 3), according to an exemplary embodiment. In this example, the controller 308 can determine, based on a model of the object, that the production process of the object includes a task of depositing an adhesive onto a curved surface 502 of an object 500. Then, the system can generate a deposition pattern that achieves a desired result indicated by the model. In an example, the deposition pattern can be based on features of the worksite and/or features of the object 500. As explained above, the relevant features for the adhesive application task can include dimensions of the target object, material of the target object, potential tension stress, compression stress, and/or strain of the target object, potential impact and vibration forces that the target object may experience, potential fatigue, potential contact with other chemicals, etc. As illustrated in Figure 5A, the controller 306 can generate a deposition pattern that includes segments 504A, 504B, 504C, 504D, 504E, and 504F. Within examples, the controller 306 can parametrically define the deposition pattern by defining the pattern with respect to one or more features of the object 500.

Figure 5B illustrates a side-view of the object 500, according to an exemplary embodiment. As illustrated in Figure 5B, the controller 306 can determine that each segment of the deposition pattern has a rectangular shape. As further illustrated in Figure 5B, segment 504C of the deposition pattern may have a width (w₁), a height (h₁), and a length (not illustrated in Figure 5B). Further, there may be a spacing (s₁) between the segment 504C and segment 504D of the deposition pattern. Note that different portions of the deposition pattern on the surface 502 may have different shapes, dimensions, and spacings.

Additionally and/or alternatively, the control system 306 can determine one or more control parameters of the end-effector such that the end-effector can deposit the adhesive in the deposition pattern. The control parameters include a trajectory of the applicator, a speed of the applicator, a pressure at which the applicator deposits an adhesive, a type of adhesive to be deposited, a size of the nozzle (i.e., tip size) of the applicator, a dispense time, an adhesive type, etc.

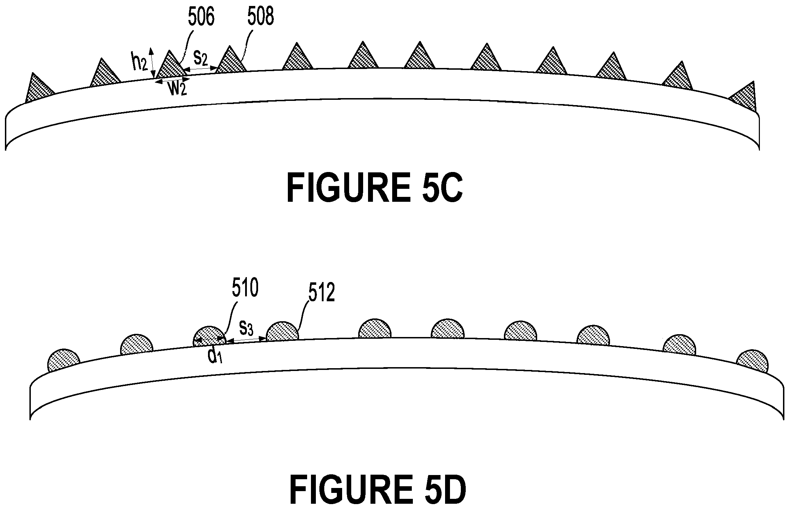

At runtime, the controller 306 can scan the object 500 in order to determine any deviations from the model. In response to detecting a deviation, the controller 306 can update the one or more control parameters in order to generate a deposition pattern that accounts for the deviation. For example, the controller 306 can generate the deposition pattern illustrated in Figure 5C. As illustrated in Figure 5C, the segments of the deposition pattern can have a triangular shape. As further illustrated in Figure 5C, a segment 506 of the deposition pattern may have a base width (w₂), a height (h₂), and a length (not illustrated in Figure 5C). Further, there may be a spacing (s₂) between the segment 506 and a segment 508 of the deposition pattern. Figure 5D illustrates yet another example deposition pattern. As illustrated in Figure 5D, the segments of the deposition pattern can have a circular or semicircular shape. As further illustrated in Figure 5D, a segment 510 of the deposition pattern may have a diameter (di) and a length (not illustrated in Figure 5D). Further, there may be a spacing (s₃) between the segment 510 and a segment 512 of the deposition pattern. Other deposition patterns, shapes, and dimensions are possible.

Although Figures 4A-4B and 5A-5D depict example adhesion application tasks, these examples should not be limiting. Other example path-based tasks may include any task where an end-effector moves with respect to a surface of an object in a particular trajectory. Such path-based tasks can be performed using other types of tools. Such tools can manipulate an object (e.g., remove material from a surface) and/or interact with the object without manipulating the object (e.g., sensors, scanners, etc.). Examples tools that can remove materials from a surface include tools that are configured to perform sanding, deburring, polishing, etc.

The robotic control system can perform a sanding task as part of a production process of an output product. The system can analyze a parametric model of the output product to define a parameter of the sanding task. For instance, the system can determine that a surface of the object has a particular finish, and then, can define the parameter to be the desired finish of the surface. Then, the system can generate along the surface of the object a sanding pattern that achieves the desired finish of the target object. Additionally, the system can define the sanding pattern parametrically, and can use the sanding pattern to generate a parametric toolpath for the sander end-effector.

At runtime, the system can use sensor data to detect deviations of the object from its parametric model. For example, the system can detect changes in the worksite and/or deviations from the model that would cause different interaction than originally determined between the tooling and the surface. For instance, due to a change to the surface, e.g., wood hardness, the system can determine a different pressure to exert using the sander to achieve the desired surface finish. Additionally, based on the sensor data, the system can map the parametric toolpath to the target object. Then the system can determine instructions for performing the sanding task, such as instructions indicative of the toolpath and/or instructions indicative of control parameters (e.g., rotational speed of the sander, pressure applied using the sander, etc.) of the sander.

In some embodiments, the robotic control system can manipulate or interact with an object in the worksite for which the system does not have a model. In such examples, the system, can generate the parametric toolpath for the end-effector in real-time. For instance, the system can use sensor data to generate a representation of the object. The system can then use the representation of the object to generate a parametric toolpath for the object.

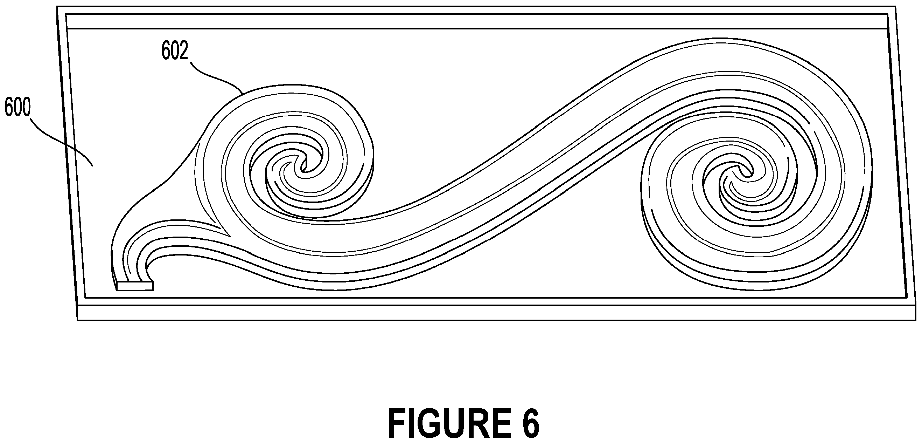

Figure 6 illustrates a carving task, according to an exemplary embodiment. In this example, the task is a carving task to carve the surface 600. The system can cause a scanner (not illustrated) to scan the surface 600, and based on the scan of the surface, the system can determine relevant features of the surface 600. The relevant features for the carving task may include dimensions of the target object, material of the target object, potential tension stress, compression stress, and/or strain of the target object, potential impact and vibration forces that the target object may experience, potential fatigue, etc.

Based on the features, the system can determine one or more values for control parameters for the carving tool end-effector. The control parameters include a trajectory of the tool, a speed of the tool, a pressure with which to apply the tool to the surface, a size of the tool or tool-tip, etc. In particular, by determining values for these control parameters the system may determine a carving pattern 602 on the surface 600. The carving pattern may result in a specified amount of material being removed from the surface, and therefore, results in certain shapes being carved into the surface. In some examples, the system may use the scan to determine the carving pattern. Then the system may determine the values of the control parameters that achieve the desired carving pattern.

### V. Additional Features

### A. Generating Instructions During a Pre-Build Phase

As described above, the system can generate instructions for task a during the build phase (i.e., at the runtime of that particular task). However, in another embodiment, the system can also generate instructions during a design phase. In particular, after generating one or more tasks in the design phase, the system can then generate instructions for the one or more tasks, such as a path-based task. To generate the instructions, the system can define the desired path-based task in terms of one or more task parameters. The system can then generate based on the one or more task parameters of the path-based task, the system can generate parametric instructions for the task. The parametric instructions can be indicative of values of control parameters of the end-effector. In particular, if the control parameters of the end-effector are set at the determined values, the end-effector would perform the task such that the result of the performance meets the task parameters. In some examples, the system can use the parameters of the path-based task and a nominal model of the target object to generate the parametric instructions for the task. By way of example, the system can generate parametric instructions indicative of the toolpath of the end-effector. Such parametric instructions define the toolpath parametrically with respect to one or more features of the object and/or the worksite.

As explained above, in some cases, the target object can be constructed or assembled in the production site. However, the "as-built" target object can deviate from the nominal model of the object. In order to account for any deviations that may exist between the nominal model and the as-built physical object, the control system can cause a scanner to scan the as-built physical object. Based on the scan of the object, the control system can determine any deviations between the as-built physical object and the nominal model of the object.

If the control system detects any deviations, the control system may update the parametric instructions to account for the deviations. In particular, since the toolpath is described parametrically, the control system may rapidly update the instructions to account for the deviations such that the updated instructions satisfy the task parameters. The flexibility afforded to the system to adjust the parametric instructions, as opposed to predetermined positional instructions, allows the system to account for any deviations or changes in the production site. It also allows the system to rapidly account for any deviations without significant delays in the production process.

### VI. Example Operations

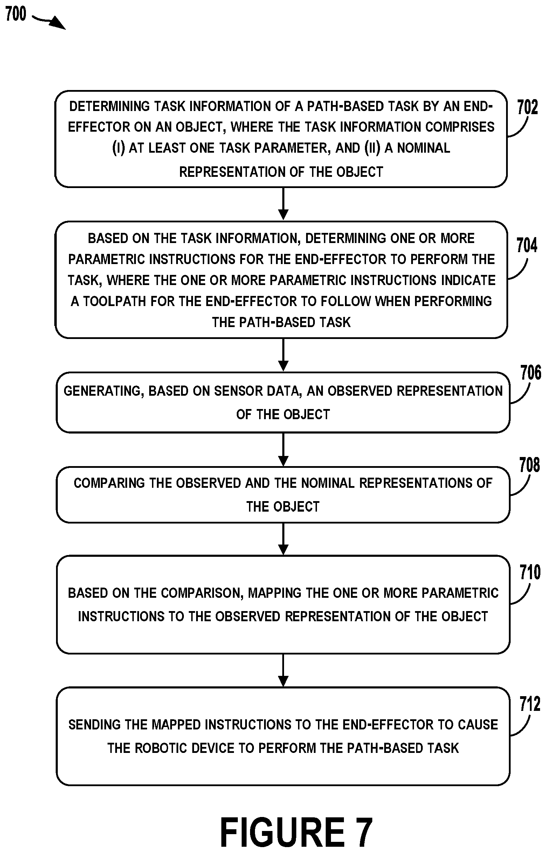

Operations relating to the robotic control system described above may be implemented as a method by one or more processors. As explained above, the robotic control system may operate one or more robotic devices. Therefore, there may be exchange of signals between the robotic device and the robotic control system. Example methods 700, 800, 900, and 1000 that describe the operations of a robotic control system are illustrated in the form of flowcharts in Figures 7, 8, 9, and 10 respectively.

Figure 7 illustrates an example method 700 of the robotic control system performing a task, according to an example embodiment. As illustrated in block 702, method 700 involves determining task information of a path-based task by an end-effector on an object, where the task information comprises (i) at least one task parameter, and (ii) a nominal representation of the object. As illustrated by block 704, the method 700 also involves, based on the task information, determining one or more parametric instructions for the end-effector to perform the task, where the one or more parametric instructions indicate a toolpath for the end-effector to follow when performing the path-based task.

As shown in block 706, the method 700 further involves generating, based on sensor data, an observed representation of the object. As illustrated by block 708, the method 700 further involves comparing the observed and the nominal representations of the object. As illustrated by block 710, the method 700 yet further involves based on the comparison, mapping the one or more parametric instructions to the observed representation of the object. In some examples, the one or more parametric instructions can be updated in real-time. As shown by block 712, the method 700 additionally involves sending the mapped instructions to the end-effector to cause the robotic device to perform the path-based task.

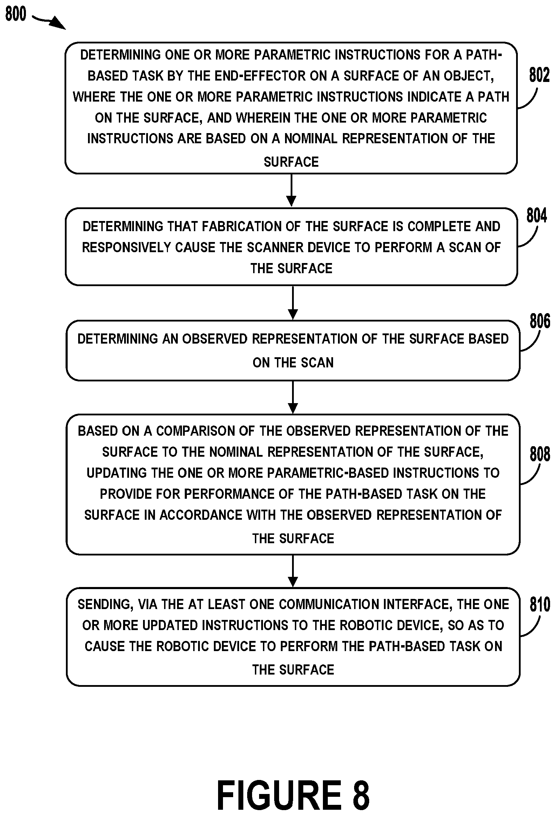

Figure 8 illustrates another example method 800 of the robotic control system performing a task, according to an example embodiment. As illustrated in block 802, method 800 involves determining one or more parametric instructions for a path-based task by the end-effector on a surface of an object, where the one or more parametric instructions indicate a path on the surface, and where the one or more parametric instructions are based on a nominal representation of the surface. As illustrated by block 804, the method 800 also involves determining that fabrication of the surface is complete and responsively cause the scanner device to perform a scan of the surface. For instance, the robotic control system could determine based on sensor data that the fabrication is complete. Additionally and/or alternatively, the robotic control system could receive from a robotic device controlling the end-effector an indication that the end-effector has completed fabrication of the surface.

As shown in block 806, the method 800 further involves determining an observed representation of the surface based on the scan. As illustrated by block 808, the method 800 further involves based on a comparison of the observed representation of the surface to the nominal representation of the surface, updating the one or more parametric-based instructions to provide for performance of the path-based task on the surface in accordance with the observed representation of the surface. As shown by block 810, the method 800 additionally involves sending, via the at least one communication interface, the one or more updated instructions to the robotic device, so as to cause the robotic device to perform the path-based task on the surface.

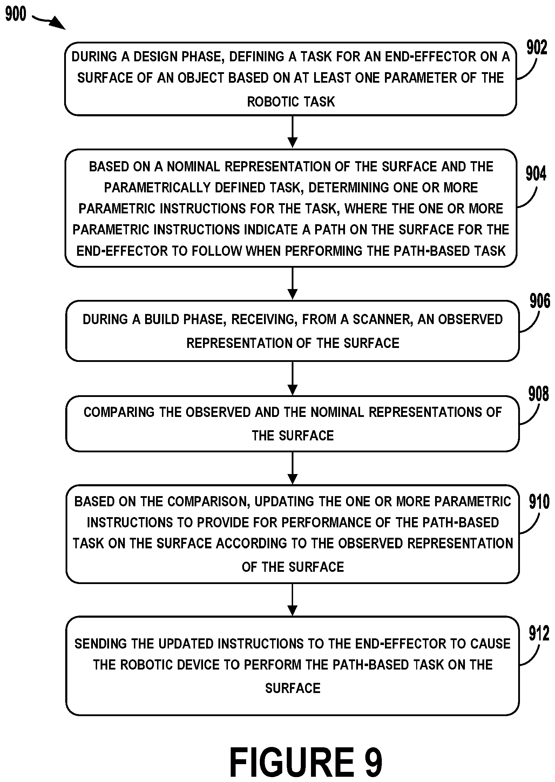

Figure 9 illustrates another example method 900 of the robotic control system performing a task, according to an example embodiment. As illustrated in block 902, method 900 involves during a design phase, defining a task for an end-effector on a surface of an object based on at least one parameter of the robotic task. As illustrated by block 904, the method 900 also involves based on a nominal representation of the surface and the parametrically defined task, determining one or more parametric instructions for the task, where the one or more parametric instructions indicate a path on the surface for the end-effector to follow when performing the path-based task.

As shown in block 906, the method 900 further involves during a build phase, receiving, from a scanner, an observed representation of the surface. As illustrated by block 908, the method 900 further involves comparing the observed and the nominal representations of the surface. As shown by block 910, the method 900 additionally involves based on the comparison, updating the one or more parametric instructions to provide for performance of the path-based task on the surface according to the observed representation of the surface. As shown by block 912, the method 900 additionally involves sending the updated instructions to the end-effector to cause the robotic device to perform the path-based task on the surface.

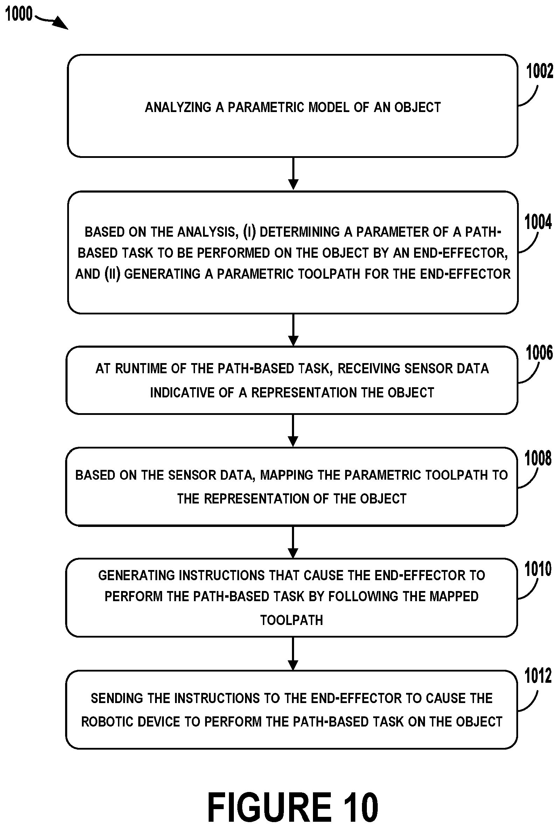

Figure 10 illustrates another example method 1000 of the robotic control system performing a task, according to an example embodiment. As shown by block 1002, the method 1000 involves analyzing a parametric model of an object. Further, as shown by block 1004, the method 1000 involves, based on the analysis, (i) determining a parameter of a path-based task to be performed on the object by an end-effector, and (ii) generating a parametric toolpath for the end-effector. As shown by block 1006, the method 1000 also involves at runtime of the path-based task, receiving sensor data indicative of a representation the object. Furthermore, as shown by block 1008, the method 1000 involves based on the sensor data, mapping the parametric toolpath to the representation of the object. Further, as shown by block 1010, the method 1000 further involves generating instructions that cause the end-effector to perform the path-based task by following the mapped toolpath. Yet further, as shown by block 1012, the method 1000 further involves sending the instructions to the end-effector to cause the robotic device to perform the path-based task on the object.

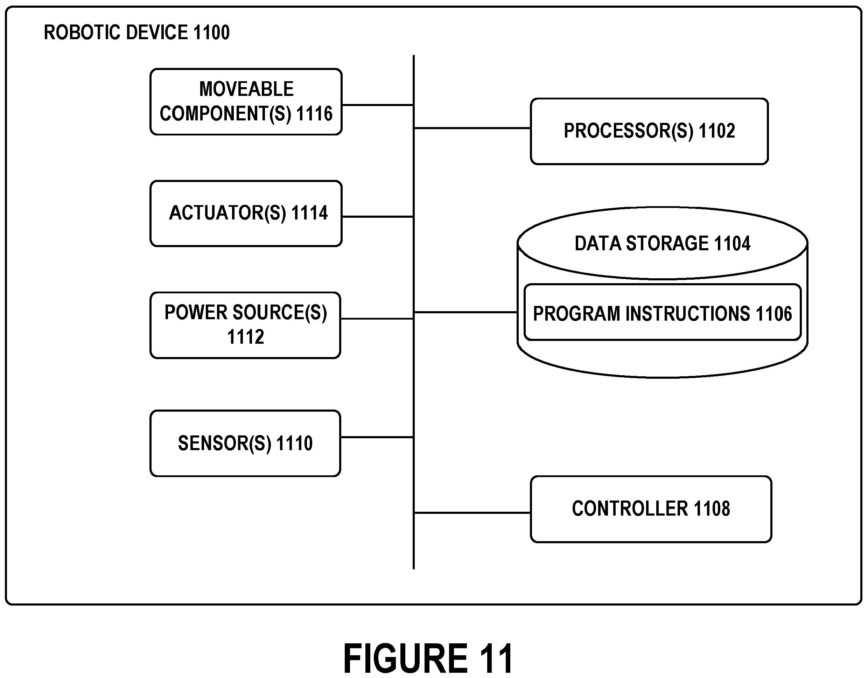

Figure 11 shows an example configuration of a robotic device 1100. Generally, a robotic device 1100 may be any device that has a computing ability and interacts with its surroundings with an actuation capability and/or with ability to emit/generate physical phenomena such as light and/or sound, among others. For instance, the robotic device 1100 may be a humanoid robot, a robotic arm, or a quadruped robot, among others. A robotic device may also be any device that is generally understood to those of ordinary skill in the art as being a "robotic." The robotic device 1100 may also be referred to as a robotic device, a robotic manipulator, a robot client, or a robot, among others.

The robotic device 1100 is shown to include processor(s) 1102, data storage 1104, program instructions 1106, controller 1108, sensor(s) 1110, power source(s) 1112, actuator(s) 1114, and movable component(s) 1116. Note that the robotic device 1100 is shown for illustration purposes only and robotic device 1100 may include additional components and/or have one or more components removed without departing from the scope of the disclosure. Further, note that the various components of robotic device 1100 may be arranged and connected in any manner.

Moreover, the above description of processor(s) 152, data storage 154, program instructions 156, sensors (e.g., local sensor(s) 130 and global sensor(s) 140), and/or power source 162, may apply to any discussion below relating to the respective component being used in another system or arrangements. For instance, as noted, Figure 11 (among other possible figures) illustrates processors, data storage, program instructions, sensors, and/or power as being incorporated in another arrangement. These components at issue may thus take on the same or similar characteristics (and/or form) as the respective components discussed above in association with Figure 1. However, the components at issue could also take on other characteristics (and/or form) without departing from the scope of the disclosure.

As noted, the robotic device 1100 may include a controller 1108 (e.g., taking the form of a microcontroller). The controller 1108 may include processing unit and data storage, and may be arranged to manage or carry out various operations (e.g., individually or in collaboration with processor(s) 1102). Thus, this controller 1108 could take on the same or similar characteristics (and/or form) as the above-mentioned controller 150, but could take on other characteristics (and/or form) as well. So in some implementations, the controller 150 may be incorporated as part the robotic device 1100 and thus controller 150 may itself be controller 1108. In other implementation, controller 1108 may be included as part of the robotic device 1100 and controller 150 may be separate from the robotic device 1100. Regardless of the implementations, these controllers may take various forms. For instance, a controller may take the form of a chip set, a server system, a digital signal processor, a programmable logic controller, and/or a sampled-data system, among other possibilities. Moreover, a controller could also be referred to herein as a control system, among other.

Additionally, the robotic device 1100 may also include one or more actuator(s) 1114. An actuator is a mechanism that may be used to introduce mechanical motion. In particular, an actuator may be configured to convert stored energy into movement of one or more components. Various mechanisms may be used to power an actuator. For instance, actuators may be powered by chemicals, compressed air, hydraulics, or electricity, among other possibilities. With this arrangement, actuator(s) 1114 may cause movement of various movable component(s) 1116 of the robotic device 1100. The moveable component(s) 1116 may include appendages/members such as robotic arms, legs, and/or hands, among others. The moveable component(s) 1116 may also include a movable base, wheels, and/or end-effectors, among others. Further, when a robotic device 1100 includes at least one end-effector, such an end-effector may be a tool (e.g., a screwdriver, drill, welding iron, or some combination thereof) and/or a gripper, among others as discussed above.

### VII. Conclusion

The present disclosure is not to be limited in terms of the particular embodiments described in this application, which are intended as illustrations of various aspects. Many modifications and variations can be made without departing from its scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims.

The above detailed description describes various features and functions of the disclosed systems, devices, and methods with reference to the accompanying figures. In the figures, similar symbols typically identify similar components, unless context dictates otherwise. The example embodiments described herein and in the figures are not meant to be limiting. Other embodiments can be utilized, and other changes can be made, without departing from the scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

A block that represents a processing of information, such as a block of a method described above, may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical functions or actions in the method or technique. The program code and/or related data may be stored on any type of computer readable medium such as a storage device including a disk or hard drive or other storage medium.

The computer readable medium may also include non-transitory computer readable media such as computer-readable media that stores data for short periods of time like register memory, processor cache, and random access memory (RAM). The computer readable media may also include non-transitory computer readable media that stores program code and/or data for longer periods of time, such as secondary or persistent long term storage, like read only memory (ROM), optical or magnetic disks, compact-disc read only memory (CD-ROM), for example. The computer readable media may also be any other volatile or non-volatile storage systems. A computer readable medium may be considered a computer readable storage medium, for example, or a tangible storage device.

Moreover, a block that represents one or more information transmissions may correspond to information transmissions between software and/or hardware modules in the same physical device. However, other information transmissions may be between software modules and/or hardware modules in different physical devices.

The particular arrangements shown in the figures should not be viewed as limiting. It should be understood that other embodiments can include more or less of each element shown in a given figure. Further, some of the illustrated elements can be combined or omitted. Yet further, an example embodiment can include elements that are not illustrated in the figures.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method comprising:
determining task information of a path-based task to be performed by an end-effector (120) of a robotic device (110) on an object, wherein the task information comprises (i) at least one task parameter, and (ii) a nominal representation of the object;
based on the task information, determining one or more parametric instructions for the end-effector (120) to perform the task, wherein the one or more parametric instructions indicate a toolpath for the end-effector (120) to follow when performing the path-based task;
generating, based on sensor data, an observed representation of the object;
identifying one or more deviations between the observed representation of the object and the nominal representation of the object;
based at least on the one or more deviations, updating the one or more parametric instructions to provide for performance of the path-based task;
mapping the updated one or more parametric instructions to the observed representation of the object; and
sending the mapped parametric instructions to the end-effector to cause the robotic device (110) to perform the path-based task,
wherein the one or more parametric instructions further indicate one or more values for one or more control parameters controlling action of the end-effector (120) as the end-effector (120) moves along the toolpath, the one or more control parameters being updated based on the one or more deviations when the one or more parametric instructions are updated; and
wherein the path-based task is a sanding task, wherein the end-effector (120) comprises a sander, and wherein the task parameter comprises a desired surface finish, and further comprising:
determining material property information indicative of a type of material of the object; and
determining, based on the material property information and the task parameter, (i) a speed of motion of the end-effector (120) while moving along the toolpath, and (ii) pressures to be exerted by the end-effector (120).

2. The method of claim 1, wherein the one or more parametric instructions define instructions for the end-effector (120) such that the end-effector (120) performing the path-based task satisfies the at least one task parameter.

3. The method of claim 1, wherein determining one or more parametric instructions for the end-effector (120) to perform the task is further based on at least one of: a feature of the end-effector (120) or a feature of the object.

4. The method of claim 1, wherein mapping the one or more parametric instructions comprises mapping the toolpath to the representation of the object.

5. The method of claim 1, wherein the one or more control parameters comprise one or more of: a speed of the end-effector (120), a pressure applied by the end-effector (120), and a torque applied by the end-effector (120).

6. The method of claim 1, wherein the nominal representation of the object is provided by a pre-build model of the object, and wherein the observed representation of the object comprises a post-build representation of the object.

7. A system comprising:
at least one communication interface for communication with a robotic device (110), wherein the robotic device (110) comprises an end-effector (120) configured to interact with objects;
at least one communication interface for communication with a scanner device;
at least one processor;
a non-transitory computer readable medium (CRM) comprising program instructions executable by the at least one processor perform functions, the functions comprising:
determining one or more parametric instructions for a path-based task by the end-effector (120) on a surface of an object, wherein the one or more parametric instructions indicate a path on the surface, and wherein the one or more parametric instructions are based on a nominal representation of the surface;
determining that fabrication of the surface is complete and responsively cause the scanner device to perform a scan of the surface;
determining an observed representation of the surface based on the scan;
based on an identification of one or more deviations between the observed representation of the surface and the
nominal representation of the surface, updating the one or more parametric-based instructions to provide for performance of the path-based task on the surface in accordance with the observed representation of the surface; and
sending, via the at least one communication interface, the one or more updated instructions to the robotic device (110), so as to cause the robotic device (110) to perform the path-based task on the surface,
wherein the one or more parametric instructions further indicate one or more values for one or more control parameters controlling action of the end-effector (120) as the end-effector (120) moves along the path, wherein the one or more control parameters are updated based on the one or more deviations when the one or more parametric instructions are updated; and
wherein the path-based task is a sanding task, wherein the end-effector (120) comprises a sander, and wherein the task parameter comprises a desired surface finish, and further comprising:
determining material property information indicative of a type of material of the object; and
determining, based on the material property information and the task parameter, (i) a speed of motion of the end-effector (120) while moving along the toolpath, and (ii) pressures to be exerted by the end-effector (120).

8. The system of claim 7, wherein determining one or more parametric instructions for the end-effector (120) to perform the task is further based on at least one of: a feature of the end-effector (120) or a feature of the object.

9. The system of claim 7, wherein updating the one or more parametric instructions comprises determining an updated path on the surface for the end-effector (120).

## Patentansprüche

1. Verfahren, umfassend:
Bestimmen von Aufgabeninformationen einer wegbasierten Aufgabe, die durch einen Endeffektor (120) einer Robotervorrichtung (110) an einem Objekt durchzuführen ist, wobei die Aufgabeninformationen (i) mindestens einen Aufgabenparameter und (ii) eine nominale Darstellung des Objekts umfassen;
basierend auf den Aufgabeninformationen, Bestimmen einer oder mehrerer parametrischer Anweisungen für den Endeffektor (120) zum Durchführen der Aufgabe, wobei die eine oder mehreren parametrischen Anweisungen einen Werkzeugweg angeben, dem der Endeffektor (120) beim Durchführen der wegbasierten Aufgabe zu folgen hat;
Erzeugen einer beobachteten Darstellung des Objekts basierend auf Sensordaten;
Identifizieren einer oder mehrerer Abweichungen zwischen der beobachteten Darstellung des Objekts und der nominalen Darstellung des Objekts;
basierend mindestens auf der einen oder den mehreren Abweichungen, Aktualisieren der einen oder mehreren parametrischen Anweisungen, die für die Durchführung der wegbasierten Aufgabe bereitzustellen sind;
Zuordnen der aktualisierten einen oder mehreren parametrischen Anweisungen zur beobachteten Darstellung des Objekts; und
Senden der zugeordneten parametrischen Anweisungen an den Endeffektor, um die Robotervorrichtung (110) zu veranlassen, die wegbasierte Aufgabe durchzuführen,
wobei die eine oder mehreren parametrischen Anweisungen ferner einen oder mehrere Werte für einen oder mehrere Steuerparameter angeben, die eine Aktion des Endeffektors (120) steuern, während sich der Endeffektor (120) entlang des Werkzeugwegs bewegt, wobei der eine oder die mehreren Steuerparameter basierend auf der einen oder den mehreren Abweichungen aktualisiert werden, wenn die eine oder mehreren parametrischen Anweisungen aktualisiert werden; und
wobei die wegbasierte Aufgabe eine Schleifaufgabe ist, wobei der Endeffektor (120) einen Schleifer umfasst, und wobei der Aufgabenparameter eine gewünschte Oberflächenbeschaffenheit umfasst, und ferner umfassend:
Bestimmen von Materialeigenschaftsinformationen, die eine Materialart des Objekts angeben; und
Bestimmen (i) einer Bewegungsgeschwindigkeit des Endeffektors (120), während er sich entlang des Werkzeugwegs bewegt, und (ii) von Drücken, die durch den Endeffektor (120) auszuüben sind, basierend auf den Materialeigenschaftsinformationen und dem Aufgabenparameter.

2. Verfahren nach Anspruch 1, wobei die eine oder mehreren parametrischen Anweisungen Anweisungen für den Endeffektor (120) definieren, so dass der Endeffektor (120), der die wegbasierte Aufgabe durchführt, den mindestens einen Aufgabenparameter erfüllt.

3. Verfahren nach Anspruch 1, wobei das Bestimmen einer oder mehrerer parametrischer Anweisungen für den Endeffektor (120) zum Durchführen der Aufgabe ferner auf mindestens einem von Folgenden basiert: einem Merkmal des Endeffektors (120) oder einem Merkmal des Objekts.

4. Verfahren nach Anspruch 1, wobei das Zuordnen der einen oder mehreren parametrischen Anweisungen Zuordnen des Werkzeugwegs zu der Darstellung des Objekts umfasst.

5. Verfahren nach Anspruch 1, wobei der eine oder die mehreren Steuerparameter eines oder mehrere von Folgenden umfassen: eine Geschwindigkeit des Endeffektors (120), einen Druck, der durch den Endeffektor (120) aufgebracht wird, und ein Drehmoment, das durch den Endeffektor (120) aufgebracht wird.

6. Verfahren nach Anspruch 1, wobei die nominale Darstellung des Objekts durch ein vor der Fertigung erstelltes Modell des Objekts bereitgestellt wird und wobei die beobachtete Darstellung des Objekts eine nach der Fertigung erstellte Darstellung des Objekts umfasst.

7. System, umfassend:
mindestens eine Kommunikationsschnittstelle zur Kommunikation mit einer Robotervorrichtung (110), wobei die Robotervorrichtung (110) einen Endeffektor (120) umfasst, der zum Interagieren mit Objekten konfiguriert ist;
mindestens eine Kommunikationsschnittstelle zur Kommunikation mit einer Abtastvorrichtung;
mindestens einen Prozessor;
ein nicht flüchtiges computerlesbares Medium (CRM), das Programmanweisungen umfasst, die durch den mindestens einen Prozessor ausführbar sind, Funktionen durchzuführen, wobei die Funktionen Folgendes umfassen:
Bestimmen einer oder mehrerer parametrischer Anweisungen für eine wegbasierte Aufgabe durch den Endeffektor (120) an einer Oberfläche eines Objekts, wobei die eine oder mehreren parametrischen Anweisungen einen Weg auf der Oberfläche angeben und wobei die eine oder mehreren parametrischen Anweisungen auf einer nominalen Darstellung der Oberfläche basieren;
Bestimmen, dass die Herstellung der Oberfläche abgeschlossen ist, und als Reaktion darauf Veranlassen, dass die Abtastvorrichtung eine Abtastung der Oberfläche durchführt;
Bestimmen einer beobachteten Darstellung der Oberfläche basierend auf der Abtastung;
basierend auf einer Identifikation einer oder mehrerer Abweichungen zwischen der beobachteten Darstellung der Oberfläche und der nominalen Darstellung der Oberfläche, Aktualisieren der einen oder mehreren Parameter-basierten Anweisungen, die für die Durchführung der wegbasierten Aufgabe an der Oberfläche bereitzustellen sind, in Übereinstimmung mit der beobachteten Darstellung der Oberfläche, und
Senden der einen oder mehreren aktualisierten Anweisungen über die mindestens eine Kommunikationsschnittstelle an die Robotervorrichtung (110), um die Robotervorrichtung (110) zu veranlassen, die wegbasierte Aufgabe an der Oberfläche auszuführen,
wobei die eine oder mehreren parametrischen Anweisungen ferner einen oder mehrere Werte für einen oder mehrere Steuerparameter angeben, die eine Aktion des Endeffektors (120) steuern, während sich der Endeffektor (120) entlang des Wegs bewegt, wobei der eine oder die mehreren Steuerparameter basierend auf der einen oder den mehreren Abweichungen aktualisiert werden, wenn die eine oder mehreren parametrischen Anweisungen aktualisiert werden; und
wobei die wegbasierte Aufgabe eine Schleifaufgabe ist, wobei der Endeffektor (120) einen Schleifer umfasst, und wobei der Aufgabenparameter eine gewünschte Oberflächenbeschaffenheit umfasst, und ferner umfassend:
Bestimmen von Materialeigenschaftsinformationen, die eine Materialart des Objekts angeben; und
Bestimmen (i) einer Bewegungsgeschwindigkeit des Endeffektors (120), während er sich entlang des Werkzeugwegs bewegt, und (ii) von Drücken, die durch den Endeffektor (120) auszuüben sind, basierend auf den Materialeigenschaftsinformationen und dem Aufgabenparameter.

8. System nach Anspruch 7, wobei das Bestimmen einer oder mehrerer parametrischer Anweisungen für den Endeffektor (120) zum Durchführen der Aufgabe ferner auf mindestens einem von Folgenden basiert: einem Merkmal des Endeffektors (120) oder einem Merkmal des Objekts.

9. System nach Anspruch 7, wobei das Aktualisieren der einen oder mehreren parametrischen Anweisungen Bestimmen eines aktualisierten Wegs auf der Oberfläche für den Endeffektor (120) umfasst.

## Revendications

1. Procédé comprenant :
la détermination d'informations de tâche d'une tâche basée sur un trajet devant être effectuée par un effecteur terminal (120) d'un dispositif robotique (110) sur un objet, lesdites informations de tâche comprenant (i) au moins un paramètre de tâche, et (ii) une représentation nominale de l'objet ;
sur la base des informations de tâche, la détermination d'une ou plusieurs instructions paramétriques pour que l'effecteur terminal (120) effectue la tâche, lesdites une ou plusieurs instructions paramétriques indiquant un trajet d'outil que l'effecteur terminal (120) doit suivre lors de l'exécution de la tâche basée sur un trajet ;
la génération, sur la base de données de capteur, d'une représentation observée de l'objet ;
l'identification d'un ou plusieurs écarts entre la représentation observée de l'objet et la représentation nominale de l'objet ;
sur la base au moins desdits un ou plusieurs écarts, la mise à jour desdites une ou plusieurs instructions paramétriques pour permettre l'exécution de la tâche basée sur un trajet ;
le mappage desdites une ou plusieurs instructions paramétriques mises à jour sur la représentation observée de l'objet ; et
l'envoi des instructions paramétriques mappées à l'effecteur terminal pour amener le dispositif robotique (110) à exécuter la tâche basée sur un trajet,
lesdites une ou plusieurs instructions paramétriques indiquant en outre une ou plusieurs valeurs pour un ou plusieurs paramètres de commande commandant l'action de l'effecteur terminal (120) lorsque l'effecteur terminal (120) se déplace le long du trajet d'outil, lesdits un ou plusieurs paramètres de commande étant mis à jour sur la base desdits un ou plusieurs écarts lorsque lesdites une ou plusieurs instructions paramétriques sont mises à jour ; et
ladite tâche basée sur un trajet étant une tâche de ponçage, ledit effecteur terminal (120) comprenant une ponceuse, et ledit paramètre de tâche comprenant une finition de surface souhaitée, et comprenant en outre :
la détermination d'informations de propriété matérielle indiquant le type de matériau de l'objet ; et
la détermination, sur la base des informations de propriété matérielle et du paramètre de tâche, (i) de la vitesse de déplacement de l'effecteur terminal (120) lors du déplacement le long du trajet d'outil, et (ii) des pressions devant être exercées par l'effecteur terminal (120).

2. Procédé selon la revendication 1, lesdites une ou plusieurs instructions paramétriques définissant des instructions pour l'effecteur terminal (120) de sorte que l'effecteur terminal (120) exécutant la tâche basée sur un trajet satisfasse audit au moins un paramètre de tâche.

3. Procédé selon la revendication 1, ladite détermination d'une ou plusieurs instructions paramétriques pour que l'effecteur terminal (120) effectue la tâche étant en outre basée sur au moins une caractéristique parmi : une caractéristique de l'effecteur terminal (120) ou une caractéristique de l'objet.

4. Procédé selon la revendication 1, ledit mappage desdites une ou plusieurs instructions paramétriques comprenant le mappage du trajet d'outil sur la représentation de l'objet.

5. Procédé selon la revendication 1, lesdits un ou plusieurs paramètres de commande comprenant un ou plusieurs paramètres parmi : la vitesse de l'effecteur terminal (120), la pression appliquée par l'effecteur terminal (120) et le couple appliqué par l'effecteur terminal (120).

6. Procédé selon la revendication 1, ladite représentation nominale de l'objet étant fournie par un modèle avant construction de l'objet, et ladite représentation observée de l'objet comprenant une représentation après construction de l'objet.

7. Système comprenant :
au moins une interface de communication pour la communication avec un dispositif robotique (110), ledit dispositif robotique (110) comprenant un effecteur terminal (120) conçu pour interagir avec des objets ;
au moins une interface de communication pour la communication avec un dispositif de balayage ;
au moins un processeur ;
un support lisible par ordinateur (CRM) non transitoire comprenant des instructions de programme exécutables par ledit au moins un processeur qui exécute des fonctions, les fonctions comprenant :
la détermination d'une ou plusieurs instructions paramétriques pour une tâche basée sur un trajet par l'effecteur terminal (120) sur une surface d'un objet, lesdites une ou plusieurs instructions paramétriques indiquant un trajet sur la surface, et lesdites une ou plusieurs instructions paramétriques étant basées sur une représentation nominale de la surface ;
la détermination du fait que la fabrication de la surface est terminée et amène en réponse le dispositif de balayage à effectuer un balayage de la surface ;
la détermination d'une représentation observée de la surface sur la base du balayage ;
sur la base de l'identification d'un ou plusieurs écarts entre la représentation observée de la surface et la représentation nominale de la surface, la mise à jour desdites une ou plusieurs instructions paramétriques pour permettre l'exécution de la tâche basée sur un trajet sur la surface conformément à la représentation observée de la surface ; et
l'envoi, par le biais de ladite au moins une interface de communication, desdites une ou plusieurs instructions mises à jour au dispositif robotique (110), de manière à amener le dispositif robotique (110) à effectuer la tâche basée sur un trajet sur la surface,
lesdites une ou plusieurs instructions paramétriques indiquant en outre une ou plusieurs valeurs pour un ou plusieurs paramètres de commande commandant l'action de l'effecteur terminal (120) lorsque l'effecteur terminal (120) se déplace le long du trajet, lesdits un ou plusieurs paramètres de commande étant mis à jour sur la base desdits un ou plusieurs écarts lorsque lesdites une ou plusieurs instructions paramétriques sont mises à jour ; et
ladite tâche basée sur un trajet étant une tâche de ponçage, ledit effecteur terminal (120) comprenant une ponceuse, et ledit paramètre de tâche comprenant une finition de surface souhaitée, et comprenant en outre :
la détermination d'informations de propriété matérielle indiquant le type de matériau de l'objet ; et
la détermination, sur la base des informations de propriété matérielle et du paramètre de tâche, (i) de la vitesse de déplacement de l'effecteur terminal (120) lors du déplacement le long du trajet d'outil, et (ii) des pressions devant être exercées par l'effecteur terminal (120).

8. Système selon la revendication 7, ladite détermination d'une ou plusieurs instructions paramétriques pour que l'effecteur terminal (120) effectue la tâche étant en outre basée sur au moins une caractéristique parmi : une caractéristique de l'effecteur terminal (120) ou une caractéristique de l'objet.

9. Système selon la revendication 7, ladite mise à jour desdites une ou plusieurs instructions paramétriques comprenant la détermination d'un trajet mis à jour sur la surface pour l'effecteur terminal (120).
